# DEMANDE DE BREVET EUROPEEN

(11) **EP 4 032 773 A1**
(43) Date de publication de la demande: **27.07.2022**
(21) Numéro de dépôt: 22152634.6
(22) Date de dépôt: 21.01.2022
(51) Int. Cl.: B60W 60/00, B60W 10/188, B60T 17/22

(54) **EQUIPEMENT DE CONTRÔLE CAPABLE DE CONTRÔLER UN FREINAGE D'UN VÉHICULE AUTONOME ET VÉHICULE ASSOCIÉ**

(30) Priorité: 22.01.2021 FR 2100612
(71) Demandeur: TRANSDEV GROUP INNOVATION, 92130 Issy-les-Moulineaux (FR)
(72) Inventeur: MIRANDA, Paulo, 78960 VOISINS LE BRETONNEUX (FR); DESMOINEAUX, Nicolas, 92400 COURBEVOIE (FR); VALLOT, Laurent, 28000 CHARTRES (FR); GAGET, Aurélien, 92290 CHATENAY MALABRY (FR); CHOQUET, Laurianne, 92500 RUEIL MALMAISON (FR)
(74) Mandataire: Lavoix

(57) **Abrégé**

Equipement de contrôle (4) capable de contrôler un freinage d'un véhicule automobile autonome (1), le véhicule (1) comportant au moins une roue (6), l'équipement de contrôle (4) comprenant :
- des moyens de freinage (15) comprenant au moins un circuit hydraulique (17) et une mécanique de freinage (19) apte à appliquer une force de freinage sur la roue (6) en fonction d'une pression hydraulique présente dans le circuit hydraulique (17) ; et
- un contrôleur primaire (12), configuré pour déterminer une consigne de freinage,
- un actionneur primaire (14), propre à générer ladite pression hydraulique en fonction de la consigne de freinage lorsque ledit actionneur primaire (14) reçoit ladite consigne de freinage,
- un capteur externe (16) configuré pour transmettre, au contrôleur primaire (12), un signal de mesure externe ; et,
- un actionneur auxiliaire (21), propre à générer, en substitution de l'actionneur primaire (14), ladite pression hydraulique.

## Description

La présente invention concerne un équipement de contrôle capable de contrôler un freinage d'un véhicule automobile autonome.

La présente invention concerne également un véhicule automobile autonome embarquant un tel équipement de contrôle.

L'invention concerne le domaine du pilotage automatique de véhicules automobiles, en particulier de la sécurité du pilotage de tels véhicules.

Pour pouvoir circuler en autonomie totale alors qu'il embarque des passagers, un véhicule automobile autonome doit satisfaire à des contraintes de sécurité drastiques. En particulier, le véhicule doit être capable de détecter une défaillance de fonctionnement, afin de pouvoir mettre le véhicule en sécurité.

Ces contraintes sont particulièrement élevées en ce qui concerne le freinage du véhicule. En particulier, les contraintes de sécurité sont telles qu'il n'est généralement pas possible d'utiliser des capteurs et actionneurs du type « produits vendus sur étagère », ou produit COTS (de l'anglais « commercial off-the-shelf »). En effet, de tels produits COTS, bien que facile à se procurer et peu onéreux, ne permettent généralement pas de satisfaire le niveau de sécurité requis. De plus, il s'agit de produits propriétaires qu'il n'est donc pas aisé de monitorer.

Ainsi, jusqu'à présent, pour atteindre le niveau de sécurité requis, le développement d'un véhicule automobile autonome implique le développement de capteurs et actionneurs spécifiques permettant une surveillance de leur bon fonctionnement. Cela reste complexe et coûteux.

De plus, tout changement apporté au véhicule, par exemple sa taille, sa charge utile maximale, etc., est susceptible d'imposer des modifications aux capteurs et actionneurs, qu'il faut alors redévelopper entièrement afin de continuer à satisfaire aux exigences de sécurité.

Un but de la présente invention est de répondre à ce problème, notamment en proposant un équipement de contrôle construit autour de composants COTS tout en respectant les niveaux de sécurité requis.

A cet effet, l'invention a pour objet un équipement de contrôle capable de contrôler un freinage d'un véhicule automobile autonome, le véhicule comportant au moins une roue, l'équipement de contrôle comprenant :
- des moyens de freinage comprenant au moins un circuit hydraulique et une mécanique de freinage apte à appliquer une force de freinage sur la roue en fonction d'une pression hydraulique présente dans le circuit hydraulique ;
- un contrôleur primaire, configuré pour déterminer une consigne de freinage,
- un actionneur primaire, propre à générer ladite pression hydraulique en fonction de la consigne de freinage lorsque ledit actionneur primaire reçoit ladite consigne de freinage, l'actionneur primaire comprenant un capteur interne configuré pour transmettre, au contrôleur primaire, un signal de mesure interne correspondant à une mesure de la pression hydraulique générée par l'actionneur primaire ;
- un capteur externe configuré pour transmettre, au contrôleur primaire, un signal de mesure externe correspondant à une mesure de la pression hydraulique dans le circuit hydraulique ; et,
- un actionneur auxiliaire, propre à générer, en substitution de l'actionneur primaire, ladite pression hydraulique en fonction de la consigne de freinage lorsque ledit actionneur auxiliaire reçoit ladite consigne de freinage,
le contrôleur primaire étant configuré pour déterminer une première valeur d'erreur correspondant à la différence entre une pression hydraulique correspondant à la consigne de freinage, et le signal de mesure interne, et pour déterminer une deuxième valeur d'erreur correspondant à la différence entre le signal de mesure interne et le signal de mesure externe,
le contrôleur primaire étant configuré pour transmettre la consigne de freinage à l'actionneur auxiliaire lorsque la première valeur d'erreur est supérieure à un premier seuil d'erreur et/ou lorsque la deuxième valeur d'erreur est supérieure à un second seuil d'erreur.

Notamment, le contrôleur primaire est configuré pour transmettre la consigne de freinage à l'actionneur auxiliaire soit lorsque la première valeur d'erreur est supérieure à un premier seuil d'erreur, soit lorsque la deuxième valeur d'erreur est supérieure à un second seuil d'erreur.

Suivant d'autres aspects avantageux de l'invention, l'équipement de contrôle comprend une ou plusieurs des caractéristiques suivantes, prises isolément ou suivant toutes les combinaisons techniquement possibles :
- l'actionneur primaire comprend une centrale inertielle interne, qui est configurée pour transmettre, au contrôleur primaire, un premier signal d'accélération correspondant à une mesure interne d'une accélération instantanée du véhicule,
   l'équipement de contrôle comprenant en outre une centrale inertielle externe, indépendante de l'actionneur primaire et configurée pour transmettre, au contrôleur primaire, un deuxième signal d'accélération correspondant à une mesure externe d'une accélération instantanée du véhicule ;
- le contrôleur primaire est configuré pour calculer une accélération estimée du véhicule en fonction de la consigne de freinage et d'un poids du véhicule et d'une inclinaison instantanée du véhicule, et pour comparer le premier signal d'accélération et/ou le deuxième signal d'accélération avec l'accélération estimée ;
- l'équipement de contrôle comprend en outre un moteur électrique de traction apte à appliquer un couple instantané, de traction et/ou de freinage, à la roue, le moteur de traction comprenant un capteur de couple dudit moteur configuré pour transmettre un signal de mesure du couple instantané au contrôleur primaire, le contrôleur primaire étant configuré pour calculer l'accélération estimée en fonction en outre du signal de mesure du couple ;
- le contrôleur primaire est configuré pour comparer le premier signal d'accélération et/ou le deuxième signal d'accélération avec un seuil de freinage maximal, et pour déclencher une mise en sécurité du véhicule par envoi de la consigne de freinage correspondante à l'actionneur auxiliaire lorsque le premier signal d'accélération et/ou le deuxième signal d'accélération est supérieur au seuil de freinage maximal ;
- l'équipement de contrôle comprend en outre un contrôleur auxiliaire, configuré pour déterminer une consigne auxiliaire de freinage lorsque la consigne de freinage déterminée par le contrôleur primaire est supérieure à un seuil de consigne, l'actionneur primaire ou l'actionneur auxiliaire étant configuré pour générer la pression hydraulique en fonction de la consigne auxiliaire de freinage au lieu de la consigne de freinage ;
- l'équipement de contrôle comprend, en outre, un système primaire de pilotage automatique configuré pour générer une commande de freinage en fonction d'une trajectoire affectée au véhicule, et pour transmettre la commande de freinage au contrôleur primaire, respectivement au contrôleur auxiliaire, le contrôleur primaire, respectivement le contrôleur auxiliaire, déterminant la consigne de freinage à partir de la commande de freinage ;
- l'équipement de contrôle comprend, en outre, un système auxiliaire de pilotage automatique, configuré pour déterminer une commande de freinage auxiliaire et pour transmettre la commande de freinage auxiliaire au contrôleur primaire, respectivement au contrôleur auxiliaire, le contrôleur primaire, respectivement le contrôleur auxiliaire, déterminant la consigne de freinage à partir de la commande de freinage auxiliaire ;
- le contrôleur primaire est propre à prendre en compte la commande de freinage auxiliaire à la place de la commande de freinage, lorsque la commande de freinage est supérieure à un seuil de pilotage automatique ;
- l'équipement de contrôle comprend en outre au moins un dispositif de pilotage manuel pour générer une commande de freinage manuelle, le contrôleur primaire étant propre à élaborer la consigne de freinage à partir de la commande de freinage manuel au lieu de la commande de freinage ou de la commande de freinage auxiliaire ;
- le dispositif de pilotage manuel est en outre configuré pour générer une commande d'arrêt manuelle, l'équipement de contrôle comprenant en outre un deuxième actionneur auxiliaire configuré pour déclencher un freinage d'urgence du véhicule par génération d'une pression hydraulique prédéterminée dans le circuit hydraulique lors de la réception de la commande d'arrêt manuelle ;
- l'équipement de contrôle, capable de contrôler, en outre, un angle de braquage du véhicule, le véhicule comportant au moins une roue directrice, le contrôleur primaire étant en outre configuré pour déterminer une consigne de braquage, l'équipement de contrôle comprenant, en outre :
- un actionneur de braquage primaire configuré pour conférer un angle de braquage à la roue directrice du véhicule en fonction de la consigne de braquage lorsque ledit actionneur de braquage primaire reçoit ladite consigne de braquage, l'actionneur de braquage primaire comprenant un capteur de braquage interne configuré pour transmettre, au contrôleur primaire, un signal de braquage interne correspondant à une mesure de l'angle de braquage conféré par l'actionneur de braquage primaire ;
- un capteur de braquage externe configuré pour transmettre, au contrôleur primaire, un signal de braquage externe correspondant à une mesure de l'angle de braquage de la roue directrice ;
- un actionneur de braquage auxiliaire, configuré pour conférer un angle de braquage à la roue directrice du véhicule lorsque ledit actionneur de braquage auxiliaire reçoit ladite consigne de braquage ;
le contrôleur primaire étant configuré pour déterminer une première valeur de braquage correspondant à la différence entre la consigne de braquage et le signal de braquage interne, et configuré pour déterminer une deuxième valeur de braquage correspondant à la différence entre le signal de braquage interne et le signal de braquage externe,
le contrôleur primaire étant configuré pour transmettre la consigne de braquage à l'actionneur de braquage auxiliaire lorsque la première valeur de braquage est supérieure à un premier seuil de braquage et/ou lorsque la deuxième valeur de braquage est supérieure à un second seuil de braquage.

L'invention a également pour objet un véhicule automobile autonome embarquant un équipement de contrôle tel décrit ci-dessus.

Ces caractéristiques et avantages de l'invention apparaîtront plus clairement à la lecture de la description qui va suivre, donnée uniquement à titre d'exemple non limitatif, et faite en référence au dessin annexé, sur lequel :
[Fig 1] la figure 1 est une représentation schématique d'un véhicule automobile autonome comprenant un équipement de contrôle selon un mode de réalisation préféré de l'invention ; et,
[Fig 2] la figure 2 est une représentation schématique du véhicule de la figure 1 selon un mode de réalisation additionnel.

### SYSTEME

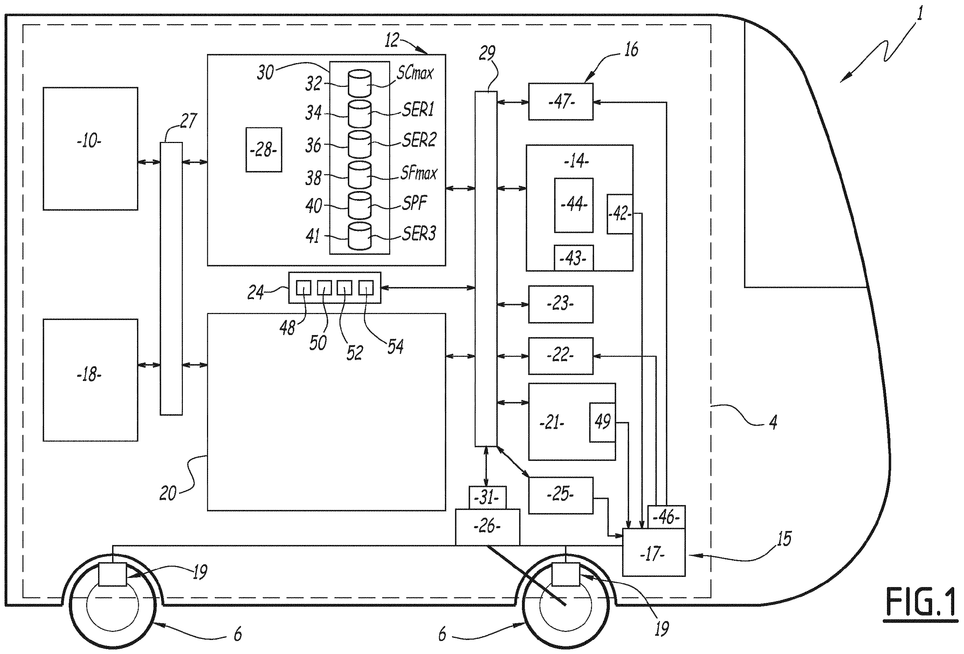

Sur la figure 1, un véhicule automobile autonome 1 comprend un équipement de contrôle 4 et des roues 6.

L'équipement de contrôle 4 est capable de contrôler un freinage du véhicule 1 par application d'une force de freinage sur au moins une des roues 6.

L'équipement de contrôle 4 comprend un système primaire de pilotage automatique 10, configuré pour générer une commande de freinage, un contrôleur primaire 12, configuré pour déterminer une consigne de freinage à partir de la commande de freinage, un actionneur primaire 14, configuré pour générer une pression hydraulique en fonction de la consigne de freinage, des moyens de freinage 15 comprenant au moins un circuit hydraulique 17 et une mécanique de freinage 19 apte à appliquer une force de freinage sur la roue 6 en fonction de la pression hydraulique présente dans le circuit hydraulique, et un capteur externe primaire 16, de mesure de la pression hydraulique présente dans le circuit hydraulique 17.

La consigne de freinage correspond par exemple à un couple de freinage requis. L'actionneur 14 est configuré pour transformer cette consigne de freinage en une valeur de pression hydraulique.

L'équipement de contrôle 4 comprend, en outre et de préférence pour des raisons de sécurité, un système auxiliaire de pilotage automatique 18, un contrôleur auxiliaire 20, un actionneur auxiliaire 21 et un capteur externe auxiliaire 22.

Le système auxiliaire de pilotage automatique 18 est en redondance du système primaire de pilotage automatique 10, le contrôleur auxiliaire 20 est en redondance du contrôleur primaire 12, l'actionneur auxiliaire 21 est en redondance de l'actionneur primaire 14, et le capteur externe auxiliaire 22 est en redondance du capteur externe primaire 16.

Le fonctionnement de chaque dispositif auxiliaire est identique ou similaire au dispositif primaire qu'il redonde.

Pour des raisons de clarté, sur la figure 1 la structure interne du contrôleur auxiliaire 20 n'est pas représentée en détails puisqu'il est identique au contrôleur primaire 12.

A contrario, la structure interne de l'actionneur auxiliaire 21 est de préférence différente par rapport à l'actionneur primaire 14. Cela est décrit plus bas.

En fonctionnement nominal de l'équipement de contrôle 4, dit état nominal, l'équipement de contrôle 4 est pleinement opérationnel et ne connaît aucune défaillance.

Lors de la détection d'une défaillance d'un dispositif de l'équipement de contrôle 4, ce dernier passe dans un fonctionnement auxiliaire, dit état auxiliaire. Dans cet état auxiliaire, le dispositif redondant vient se substituer au dispositif défaillant. L'état auxiliaire implique par exemple l'arrêt du véhicule 1. Selon un exemple, les autres dispositifs, non considérés comme défaillants, restent actifs et ne sont pas substitués par leur dispositif redondant tant qu'aucune défaillance de ces dispositifs n'est détectée.

En outre, l'équipement de contrôle 4 comprend, par exemple, une centrale inertielle externe 23 configurée pour mesurer une accélération du véhicule 1, et optionnellement la vitesse du véhicule 1.

De plus, l'équipement de contrôle 4 comprend, de préférence, au moins un dispositif de pilotage manuel 24 configuré pour générer une commande de freinage manuelle et/ou une commande d'arrêt manuelle. Un tel dispositif de pilotage manuel 24 permet à un opérateur soit de conduire le véhicule (phase de pilotage manuel), soit de reprendre la main sur le pilotage du véhicule en cas d'identification par l'opérateur d'un problème (phase de test du véhicule).

L'équipement de contrôle 4 comprend, de préférence, un deuxième actionneur auxiliaire 25 formant une redondance supplémentaire en cas de défaillance des actionneurs 14 et 21 et/ou des contrôleurs 12, 20.

L'équipement de contrôle 4 comprend, de préférence, un moteur électrique de traction 26 apte à freiner le véhicule par application d'un couple à la roue 6.

Dans l'exemple de la figure 1, les systèmes 10, 18 et les contrôleurs 12, 20 sont connectés via un bus de données 27. Les contrôleurs 12, 20, le dispositif de pilotage manuel 24, les actionneurs 14, 21, le deuxième actionneur auxiliaire 25, les capteurs externes 16, 22, la centrale inertielle externe 23 et le moteur 26 sont connectés par un bus de données 29.

En variante, au moins certains des éléments de l'équipement de contrôle 4 sont connectés entre eux par des liaisons directes au lieu d'une liaison par le bus 27, 29, ou par des bus dédiés.

Par exemple, en variante non représentée, certains éléments de l'équipement de contrôle 4 sont reliés par des bus spécifiques. Par exemple, le contrôleur 12 et le contrôleur 20 sont reliés à l'actionneur 14 par un premier bus, et à l'actionneur 21 par un deuxième bus distinct du premier bus. Les contrôleurs 12, 20 sont en outre reliés à au moins une partie du dispositif de pilotage manuel 24 par un troisième bus distinct du premier et du deuxième bus.

L'utilisation de plusieurs bus indépendants permet d'augmenter la sécurité de l'équipement de contrôle 4 en cas de défaillance, car cela permet d'éviter des modes communs de défaillance lors d'une défaillance du bus 27 ou 29.

Le système primaire de pilotage automatique 10 est par exemple un calculateur comprenant une mémoire et un processeur. Il est par exemple programmé pour calculer une trajectoire que doit suivre le véhicule 1 et pour générer des commandes de freinage adaptée aux instants requis.

Le système 10 est connecté au contrôleur primaire 12 (et/ou au contrôleur auxiliaire 20) pour une transmission de la commande de freinage au contrôleur primaire 12 (et/ou au contrôleur auxiliaire 20).

Le contrôleur primaire 12 est connecté à l'actionneur primaire 14 pour transmettre à l'actionneur primaire 14 la consigne de freinage, mais également pour recevoir depuis l'actionneur freinage 14 un signal de mesure interne, qui correspond à une mesure de la pression hydraulique générée par l'actionneur primaire 14.

En complément, le contrôleur primaire 12 est connecté à l'actionneur primaire 14 recevoir un premier signal d'accélération correspondant à une mesure interne d'une accélération instantanée du véhicule 1, mesurée par une centrale inertielle interne, décrite ci-dessous. Le premier signal d'accélération comprend une valeur négative lors du freinage du véhicule 1.

Le contrôleur 12 est en outre connecté au capteur externe primaire 16 pour recevoir un signal de mesure externe correspondant à une mesure de la pression hydraulique présente dans le circuit hydraulique 17.

Le contrôleur 12 est en outre connecté la centrale inertielle 23 externe pour recevoir un deuxième signal d'accélération correspondant à une mesure externe d'une accélération instantanée du véhicule 1. Le deuxième signal d'accélération comprend une valeur négative lors du freinage du véhicule 1.

Le contrôleur 12 est en outre connecté au dispositif de pilotage manuel 24 pour recevoir un signal électrique correspondant à la commande de freinage manuelle.

En complément, le contrôleur 12 est connecté au moteur 26 pour recevoir un signal de mesure correspondant à un couple appliqué à la roue 6 par le moteur 26.

En complément encore, le contrôleur 12 est connecté, pour des raisons de redondance, au système auxiliaire de pilotage automatique 18, à l'actionneur auxiliaire 21 et au capteur externe auxiliaire 22.

Le contrôleur 12 est par exemple connecté au contrôleur auxiliaire 20 pour recevoir un signal dit « en vie » indiquant l'état de fonctionnement nominal du contrôleur 20, et pour transmettre un signal « en vie » au contrôleur 20 pour indiquer son propre fonctionnement nominal.

De préférence, le contrôleur 12 est raccordé à une source d'alimentation électrique (non représentée) sur la figure 1, distincte d'une source d'alimentation électrique, non représentée, du contrôleur auxiliaire 20, de manière à éviter des modes communs de défaillance associés à l'alimentation en puissance électrique.

Le contrôleur primaire 12 comprend par exemple un processeur 28 et une mémoire 30, ayant plusieurs volumes de stockage de données, par exemple un premier, deuxième, troisième, quatrième, cinquième et sixième volumes 32, 34, 36, 38, 40, 41.

Le premier volume 32 comprend des valeurs d'un seuil de consigne SCmax en fonction de la vitesse instantanée V du véhicule 1. Le seuil SCmax donne, pour une vitesse donnée, des valeurs maximales autorisées de la consigne de freinage adressée à l'actionneur 14 et à l'actionneur 21.

Par « valeur maximale autorisée », il est entendu la valeur maximale dans l'état nominal de l'équipement de contrôle 4. Lors d'un dépassement de la valeur maximale autorisée, le contrôleur primaire 12, ou le cas échéant le contrôleur auxiliaire 20, constate la survenue d'une défaillance d'une partie de l'équipement de contrôle 4 et bascule dans l'état auxiliaire.

Par vitesse instantanée V est la vitesse du véhicule selon sa direction longitudinale. Elle est par exemple mesurée par la centrale inertielle externe 23 et transmise au contrôleur primaire 12 et/ou au contrôleur auxiliaire 20.

Le deuxième volume 34 comprend des valeurs d'un premier seuil d'erreur SER1. Le premier seuil d'erreur SER1 est une valeur maximale autorisée de la différence entre une pression hydraulique correspondant à la consigne de freinage et la pression hydraulique du signal de mesure interne.

Le troisième volume 36 comprend des valeurs d'un second seuil d'erreur SER2. Le second seuil d'erreur SER2 est une valeur maximale autorisée de la différence la pression hydraulique du signal de mesure interne et la pression hydraulique du signal de mesure externe.

Le premier seuil d'erreur SER1 et/ou le second seuil d'erreur SER2 dépend de préférence de la vitesse V. En variante, le premier seuil d'erreur SER1 et/ou le second seuil d'erreur SER2 est indépendant de la vitesse V.

Le quatrième volume 38 comprend des valeurs d'un seuil de freinage maximal SFmax. Ce seuil est la valeur maximale autorisée du premier signal d'accélération ou deuxième signal d'accélération correspondant à une mesure de l'accélération du véhicule 1. Il dépend de préférence de la vitesse V.

Le cinquième volume 40 comprend des valeurs d'un seuil de pilotage automatique SPF. Ce seuil est une valeur maximale autorisée de la commande de freinage reçue du système de pilotage automatique primaire ou auxiliaire. Il dépend de préférence de la vitesse V.

Le sixième volume 41 comprend des valeurs d'un troisième seuil d'erreur SER3, par exemple en fonction la vitesse instantanée V du véhicule 1. Le seuil SER3 donne, pour une vitesse donnée, des valeurs maximales autorisées de la différence d'une accélération estimée par le contrôleur 12 et l'accélération mesurée selon le premier ou deuxième signal d'accélération. En variante, le seuil SER3 est une seule valeur.

L'actionneur primaire 14 est un actionneur à commande électrique. L'actionneur primaire 14 intègre une servovalve 42 capable de générer la pression hydraulique correspondante à la consigne de freinage. L'actionneur primaire 14 comprend en outre une centrale inertielle interne 43 configurée pour générer le premier signal d'accélération, et un capteur interne 44 configuré générer le signal de mesure interne, qui correspond à une mesure de la pression hydraulique générée par la servovalve 42.

L'actionneur primaire 14 est par exemple un produit vendu sur étagère COTS. De ce fait, il n'est pas suffisamment fiable pour répondre aux besoins d'un véhicule autonome. S'il est capable d'auto-diagnostiquer une défaillance, on se doit d'avoir une confiance limitée dans ce diagnostic. C'est la raison pour laquelle est prévu d'une part un capteur externe 16 indépendant de l'actionneur 14 permettant une autre mesure de la pression hydraulique à des fins de diagnostic du bon fonctionnement de l'actionneur 14 et d'autre part un contrôleur primaire 12 configuré pour réaliser ce diagnostic et détecter la survenue d'une défaillance de l'actionneur primaire 14, et de préférence en outre configuré pour limiter les valeurs de la consigne de freinage dans des valeurs prédéterminées.

Le capteur externe primaire 16 mesure la pression hydraulique et transmet le signal de mesure externe au contrôleur primaire 12.

Par exemple, le capteur externe primaire 16, qui peut également être un produit COTS, comprend un senseur 46 faisant saillie dans le circuit hydraulique 17 et un moyen électronique d'acquisition 47 du signal délivré par le senseur 46.

L'actionneur auxiliaire 21 est identique à l'actionneur primaire 14 à l'exception du fait qu'il comprend une vanne proportionnelle 49 à la place de la servovalve 42. La vanne proportionnelle 49 générant la pression hydraulique selon un mécanisme prédéterminé permet d'obtenir une redondance lorsque la commande électrique de la servovalve 42.

Pour des raisons de clarté, les autres éléments de l'actionneur 21, identiques aux éléments correspondants de l'actionneur 14, ne sont pas représentés sur la figure 1. Par exemple, l'actionneur 21 comprend un capteur interne identique au capteur interne 44, et une centrale inertielle identique à la centrale inertielle interne 43.

L'actionneur auxiliaire 21 est de préférence également un produit COTS.

Le dispositif 24 comprend par exemple une manette 48, un ensemble volant 50/pédale 52, et/ou un bouton de sécurité 54.

La manette 48 et/ou l'ensemble volant 50/pédale 52 permettent à un opérateur de piloter et imposer un angle de braquage du véhicule 1.

La pédale 52 permet à l'opérateur d'imposer la commande de freinage manuelle du véhicule 1.

Le bouton de sécurité 54 permet à l'opérateur d'imposer un arrêt du véhicule 1 par transmission, au deuxième actionneur auxiliaire 25, de la commande d'arrêt manuelle.

La centrale inertielle externe 23 est indépendante de l'actionneur primaire 14. Elle est configurée pour mesurer l'accélération du véhicule et pour transmettre le deuxième signal d'accélération au contrôleur 12 et/ou au contrôleur 20.

Le deuxième actionneur auxiliaire 25 est configuré pour recevoir la commande d'arrêt manuelle du dispositif 24 et pour générer une pression hydraulique prédéterminée dans le circuit hydraulique 17 lors de la réception de cette commande. Par « pression hydraulique prédéterminée », il est entendu une pression non pilotable qui est fixée par les propriétés physiques de l'actionneur 25.

Le deuxième actionneur auxiliaire 25 est de préférence relié au dispositif 24 par une liaison filaire.

Le moteur 26 est doté d'un capteur de couple 31 configuré pour mesurer le couple appliqué à la roue par le moteur 26, pour générer le signal de mesure correspondant à ce couple, et pour le transmettre au contrôleur primaire 12.

### PROCEDE

Un mode de réalisation du fonctionnement du contrôleur primaire 12 va maintenant être décrit. Le fonctionnement du contrôleur auxiliaire 20 est identique lorsqu'il se substitue au contrôleur primaire.

Le contrôleur primaire 12 fonctionne selon un mode autonome ou selon un mode manuel.

Dans le mode autonome, le contrôleur primaire 12 détermine la consigne de freinage en fonction de la commande de freinage. Par exemple, le contrôleur 12 limite la consigne de freinage au seuil de freinage SCmax : lorsque la valeur de la commande de freinage est inférieure ou égale au seuil SCmax, la consigne est égale à la commande de freinage ; Sinon, la consigne de freinage est égale au seuil SCmax.

Dans le mode manuel, le contrôleur primaire 12 reçoit la commande de freinage manuelle et détermine la consigne de freinage en fonction de cette commande manuelle. Par exemple, le contrôleur primaire 12 limite la consigne de freinage au seuil SCmax.

Dans un autre exemple du mode manuel, le deuxième actionneur auxiliaire 25 reçoit la commande d'arrêt manuelle et déclenche un freinage d'urgence par génération de la pression hydraulique prédéterminée dans circuit hydraulique 17.

Quel que soit le mode de fonctionnement dans lequel il se trouve, le contrôleur primaire 12 peut être soit dans un état nominal soit dans un état auxiliaire de repli. Dans ce qui suit, des exemples de reconfiguration de l'équipement de contrôle 4 lors d'un basculement dans un état auxiliaire sont décrits.

### DETECTION DEFAILLANCE DE L'ACTIONNEUR PRIMAIRE 14 EN FONCTION DE LA CONSIGNE DE FREINAGE

Pour diagnostiquer une défaillance de l'actionneur 14, le contrôleur 12 détermine périodiquement une première valeur correspondant à la différence entre la consigne de freinage et le signal de mesure interne réalisée par le capteur interne 44.

Par exemple, le contrôleur 12 interroge le volume 34 pour connaître, compte tenu de la vitesse instantanée V, la valeur du premier seuil d'erreur SER1. Le contrôleur 12 compare ensuite la première valeur avec la valeur du premier seuil d'erreur SER1. Lorsque la première valeur est supérieure à SER1, une défaillance de l'actionneur 14 est détectée. Il peut par exemple s'agir d'une défaillance de la servovalve 42 ou du capteur interne 44. Dans ce cas, le contrôleur 12 transmet la consigne de freinage à l'actionneur auxiliaire 21 au lieu de l'actionneur primaire 14, de sorte que c'est l'actionneur auxiliaire 21 qui va dorénavant générer la pression hydraulique.

### DETECTION DEFAILLANCE DU CAPTEUR EXTERNE PRIMAIRE 16 OU DU CAPTEUR INTERNE 44

Toujours pour diagnostiquer une défaillance de l'actionneur 14, le contrôleur 12 détermine une deuxième valeur correspondant à la différence entre le signal de mesure interne réalisée par le capteur interne 44 et le signal de mesure externe réalisée par le capteur externe 16.

Par exemple, le contrôleur 12 interroge le troisième volume 36 pour connaître, compte tenu de la vitesse instantanée V, la valeur courante du second seuil d'erreur SER2. Il compare ensuite la deuxième valeur avec la valeur du le second seuil d'erreur SER2. Lorsque la deuxième valeur est supérieure à SER2, le contrôleur 12 considère qu'une défaillance affecte le capteur interne 44 ou le capteur externe primaire 16, et il décide de transmettre la consigne de freinage à l'actionneur auxiliaire 21 générer la pression hydraulique, au lieu de l'actionneur primaire 14.

### DETECTON DEFAILLANCE DE L'ACTIONNEUR PRIMAIRE 14 EN FONCTION DU PREMIER OU DEUXIEME SIGNAL D'ACCELERATION

Le contrôleur primaire 12 déclenche une alerte lorsque le premier signal d'accélération et/ou le deuxième signal d'accélération correspond à une mesure aberrante de l'accélération du véhicule.

Par exemple, le contrôleur 12 interroge le quatrième volume 38 pour connaître, par exemple compte tenu de la vitesse instantanée V, la valeur courante du seuil SFmax. Il compare le premier signal d'accélération et/ou le deuxième signal d'accélération avec le seuil SFmax. Lorsque le signal de mesure interne et/ou le signal de mesure externe est supérieur à SFmax, le contrôleur 12 considère une défaillance de l'actionneur primaire 14, et/ou de la centrale inertielle externe 23. Une défaillance de l'actionneur 14 correspond ici par exemple à une défaillance de la servovalve 42 ou de la centrale inertielle interne 43. Le contrôleur 12 considérant une défaillance transmet alors la consigne de freinage à l'actionneur auxiliaire 21 pour générer la pression hydraulique au lieu de l'actionneur primaire 14, et déclencher une mise en sécurité du véhicule 1.

### DETECTION DEFAILLANCE DE L'ACTIONNEUR PRIMAIRE 14 EN FONCTION DU PREMIER OU DEUXIEME SIGNAL D'ACCELERATION EN COMPARAISON AVEC LA CONSIGNE DE FREINAGE

Le contrôleur 12 surveille régulièrement la cohérence entre la consigne de freinage et l'accélération du véhicule 1 selon le premier et/ou deuxième signal d'accélération.

Pour ce faire, le contrôleur 12 calcule une accélération estimée du véhicule 1, à partir de la consigne de freinage et en fonction d'un poids du véhicule 1 et d'une pente instantanée mesurée du véhicule 1. Le calcul s'effectue par exemple selon des fonctions prédéterminées : Pour une consigne de freinage donnée, la valeur absolue de l'accélération estimée (pour le cas du freinage donc une décélération) est moins élevée pour un poids plus élevé. Aussi, lorsque la pente selon laquelle le véhicule 1 descend est plus raide, la valeur absolue de l'accélération estimée est moins élevée.

En complément, le contrôleur 12 calcule l'accélération estimée en outre en fonction du signal de mesure du couple reçu du moteur 26. Par exemple, la partie de l'accélération estimée induite par le couple appliqué par le moteur 26 dépend à la fois de ce couple, du poids du véhicule 1 et de la pente instantanée.

Le contrôleur 12 détermine ensuite la différence du premier signal d'accélération et/ou du deuxième signal d'accélération par rapport à l'accélération estimée. Il interroge son volume 41 pour connaître le troisième seuil d'erreur SER3, et considère une défaillance de l'actionneur primaire 14 et/ou de la centrale inertielle externe 23 lorsque la différence est supérieure au seuil SER3.

### DETECTION DEFAILLANCE CENTRALE INERTIELLE EXTERNE 23

Le contrôleur 12 calcule une différence entre le premier signal d'accélération et le deuxième signal d'accélération. Lorsque la différence est supérieure à un seuil prédéterminé, par exemple enregistré dans un volume non représenté du mémoire, le contrôleur 12 considère que la centrale inertielle externe 23, la centrale inertielle interne 43 étant réputée être plus fiable que celle-ci. Le contrôleur 12 bascule alors dans l'état auxiliaire, par exemple en mettant le véhicule 1 en sécurité par un arrêt.

### DETECTON DEFAILLANCE DU CONTROLEUR PRIMAIRE 12 EN FONCTION DE LA CONSIGNE DE FREINAGE

Pour diagnostiquer une défaillance du contrôleur primaire 12, le contrôleur auxiliaire 20 surveille la valeur de la consigne de freinage déterminée par le contrôleur primaire 12 et, en cas de défaillance de ce dernier, décide de se substituer au contrôleur primaire 12 en générant la consigne de freinage et en la transmettant à l'actionneur.

Par exemple, le contrôleur auxiliaire 20 compare périodiquement la consigne de freinage en sortie du contrôleur primaire 12 avec le seuil de consigne SCmax stocké dans son premier volume 32. Si la consigne de freinage est supérieure à SCmax, le contrôleur auxiliaire 20 considère que le contrôleur primaire 12 est défaillant. Le contrôleur auxiliaire 20 transmet la consigne auxiliaire à l'actionneur primaire 14 ou à l'actionneur auxiliaire 21 en remplacement de la consigne de freinage.

### DETECTON DEFAILLANCE DU CONTROLEUR PRIMAIRE OU DU CONTROLEUR AUXILIAIRE CAUSE PAR L'ARRET DE FONCTIONNEMENT

En l'absence de la réception par le contrôleur 12 du signal « en vie » de la part du contrôleur 20, le contrôleur 12 considère que le contrôleur 20 ne fonctionne plus et que la redondance de contrôleur est perdue. Le contrôleur 12 passe alors dans l'état auxiliaire et arrête par exemple le véhicule 1.

En l'absence de la réception du signal « en vie » de la part du contrôleur 12, le contrôleur 20 considère que celui-ci ne fonctionne plus et prend le relais du contrôleur 12.

### DETECTON DEFAILLANCE DU SYSTEME PRIMAIRE DE PILOTAGE AUTOMATIQUE 10

Pour diagnostiquer une défaillance du système de pilotage automatique, le contrôleur 12 surveille la valeur de la commande de freinage, et en cas de détection d'une défaillance demande au système auxiliaire de pilotage automatique 18 de se substituer au système primaire 10.

Pour ce faire, le contrôleur 12 interroge le cinquième volume 40 pour connaître le seuil de pilotage automatique SPF. Il compare la commande de freinage avec le seuil SPF. Lorsque la commande de freinage est supérieure à SPF, le contrôleur 12 considère le système 10 comme défaillant et demande au système auxiliaire de pilotage automatique 18 de prendre la main sur le pilotage du véhicule 1, notamment en déterminant une commande de freinage auxiliaire qui sera prise en compte à la place de la commande de freinage, pour la détermination de la consigne de freinage.

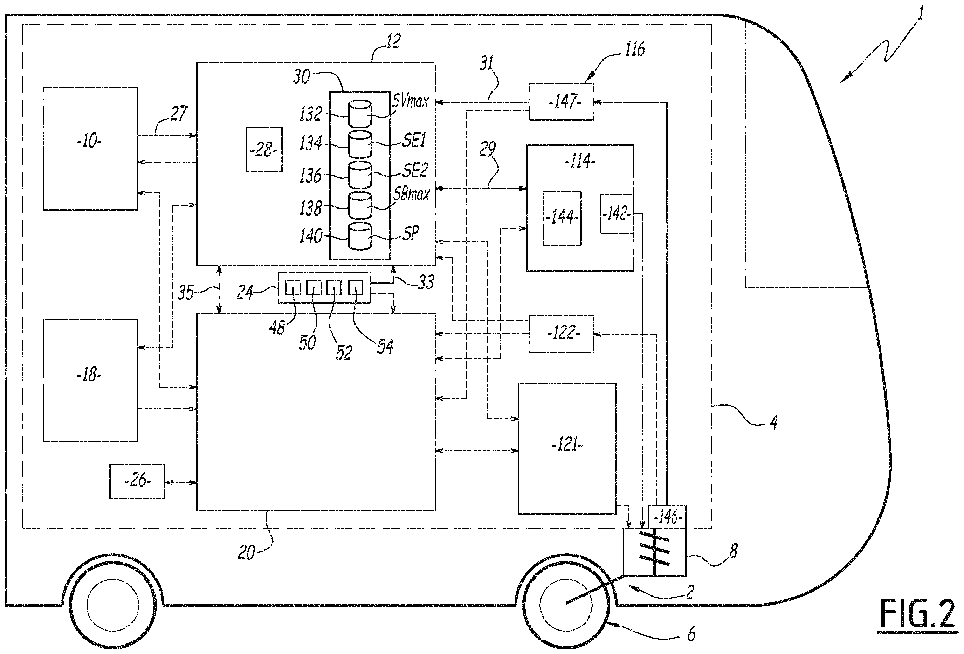

Selon un mode de réalisation illustré par la figure 2, l'équipement de contrôle 4 est en outre capable de contrôler un angle de braquage du véhicule 1.

Dans ce cas, au moins une des roues 6 est une roue dite directrice.

L'équipement de contrôle 4 comprend en outre un actionneur de braquage primaire, un capteur de braquage externe, et un actionneur de braquage auxiliaire.

L'actionneur de braquage primaire est configuré pour conférer un angle de braquage à la roue directrice 6 du véhicule 1 en fonction d'une consigne de braquage élaborée par le contrôleur 1. L'actionneur de braquage primaire comprend un capteur de braquage interne configuré pour transmettre, au contrôleur primaire 12, un signal de braquage interne correspondant à une mesure de l'angle de braquage conféré par l'actionneur de braquage primaire.

Le capteur de braquage externe est configuré pour transmettre, au contrôleur primaire 12, un signal de braquage externe correspondant à une mesure de l'angle de braquage de la roue directrice.

Le fonctionnement de l'équipement de contrôle 4 selon le présent mode de réalisation est maintenant décrit.

Le contrôleur 12 détermine une première valeur de braquage correspondant à la différence entre la consigne de braquage et le signal de braquage interne. Le contrôleur 12 détermine en outre une deuxième valeur de braquage correspondant à la différence entre le signal de braquage interne et le signal de braquage externe.

Le contrôleur 12 transmet ensuite la consigne de braquage à l'actionneur de braquage auxiliaire lorsque la première valeur de braquage est supérieure à un premier seuil de braquage SE1 et/ou lorsque la deuxième valeur de braquage est supérieure à un second seuil de braquage SE2.

Lorsque l'actionneur de braquage auxiliaire reçoit cette consigne de braquage, il confère alors un angle de braquage à la roue directrice 6 du véhicule 1.

On conçoit que l'équipement de contrôle 4 selon l'invention et le véhicule autonome 1 comprenant l'équipement de contrôle 4 présentent un grand nombre d'avantages.

En particulier, l'équipement de contrôle 4 est simple et confère une sécurité de fonctionnement élevée au véhicule automobile autonome 1. Les comparaisons, à chaque instant, de la consigne de freinage, de la mesure interne et de la mesure externe constituent un moyen robuste de détecter tout type de défaillance pouvant affecter l'actionneur primaire et/ou l'actionneur auxiliaire.

Des composants COTS peuvent donc être utilisés tout en garantissant au véhicule le niveau de sécurité requis pour un transport de passagers en autonomie complète.

La sécurité de fonctionnement de l'équipement de contrôle 4 (et par conséquent du véhicule) est augmentée par le contrôleur auxiliaire 20 et le système auxiliaire de pilotage automatique 18, qui reprennent la main en cas de défaillance du contrôleur primaire 12 ou du système primaire de pilotage automatique 10.

## Revendications

1. Equipement de contrôle (4) capable de contrôler un freinage d'un véhicule automobile autonome (1), le véhicule (1) comportant au moins une roue (6), l'équipement de contrôle (4) comprenant :
- des moyens de freinage (15) comprenant au moins un circuit hydraulique (17) et une mécanique de freinage (19) apte à appliquer une force de freinage sur la roue (6) en fonction d'une pression hydraulique présente dans le circuit hydraulique (17) ;
- un contrôleur primaire (12), configuré pour déterminer une consigne de freinage,
- un actionneur primaire (14), propre à générer ladite pression hydraulique en fonction de la consigne de freinage lorsque ledit actionneur primaire (14) reçoit ladite consigne de freinage, l'actionneur primaire (14) comprenant un capteur interne (44) configuré pour transmettre, au contrôleur primaire (12), un signal de mesure interne correspondant à une mesure de la pression hydraulique générée par l'actionneur primaire (14) ;
- un capteur externe (16) configuré pour transmettre, au contrôleur primaire (12), un signal de mesure externe correspondant à une mesure de la pression hydraulique dans le circuit hydraulique (17) ; et,
- un actionneur auxiliaire (21), propre à générer, en substitution de l'actionneur primaire (14), ladite pression hydraulique en fonction de la consigne de freinage lorsque ledit actionneur auxiliaire (21) reçoit ladite consigne de freinage,
le contrôleur primaire (12) étant configuré pour déterminer une première valeur d'erreur correspondant à la différence entre une pression hydraulique correspondant à la consigne de freinage, et le signal de mesure interne, et pour déterminer une deuxième valeur d'erreur correspondant à la différence entre le signal de mesure interne et le signal de mesure externe,
le contrôleur primaire (12) étant configuré pour transmettre la consigne de freinage à l'actionneur auxiliaire (21) lorsque la première valeur d'erreur est supérieure à un premier seuil d'erreur (SER1) et/ou lorsque la deuxième valeur d'erreur est supérieure à un second seuil d'erreur (SER2).

2. Equipement de contrôle selon la revendication 1, dans lequel l'actionneur primaire (12) comprend une centrale inertielle interne (43), qui est configurée pour transmettre, au contrôleur primaire (12), un premier signal d'accélération correspondant à une mesure interne d'une accélération instantanée du véhicule (1),
l'équipement de contrôle (4) comprenant en outre une centrale inertielle externe (23), indépendante de l'actionneur primaire (14) et configurée pour transmettre, au contrôleur primaire (12), un deuxième signal d'accélération correspondant à une mesure externe d'une accélération instantanée du véhicule (1).

3. Equipement de contrôle selon la revendication 2, dans lequel le contrôleur primaire (12) est configuré pour calculer une accélération estimée du véhicule (1) en fonction de la consigne de freinage et d'un poids du véhicule (1) et d'une inclinaison instantanée du véhicule (1), et pour comparer le premier signal d'accélération et/ou le deuxième signal d'accélération avec l'accélération estimée.

4. Equipement de contrôle selon la revendication 3, comprenant en outre un moteur électrique de traction (26) apte à appliquer un couple instantané, de traction et/ou de freinage, à la roue (6), le moteur de traction (26) comprenant un capteur de couple (31) dudit moteur (26) configuré pour transmettre un signal de mesure du couple instantané au contrôleur primaire (12), le contrôleur primaire (12) étant configuré pour calculer l'accélération estimée en fonction en outre du signal de mesure du couple.

5. Equipement de contrôle selon l'une quelconque des revendications 2 à 4, dans lequel le contrôleur primaire (12) est configuré pour comparer le premier signal d'accélération et/ou le deuxième signal d'accélération avec un seuil de freinage maximal, et pour déclencher une mise en sécurité du véhicule (1) par envoi de la consigne de freinage correspondante à l'actionneur auxiliaire (21) lorsque le premier signal d'accélération et/ou le deuxième signal d'accélération est supérieur au seuil de freinage maximal (SFmax).

6. Equipement de contrôle selon l'une quelconque des revendications précédentes, comprenant en outre un contrôleur auxiliaire (20), configuré pour déterminer une consigne auxiliaire de freinage lorsque la consigne de freinage déterminée par le contrôleur primaire (12) est supérieure à un seuil de consigne (SCmax), l'actionneur primaire (14) ou l'actionneur auxiliaire (21) étant configuré pour générer la pression hydraulique en fonction de la consigne auxiliaire de freinage au lieu de la consigne de freinage.

7. Equipement de contrôle selon l'une quelconque des revendications précédentes, comprenant, en outre, un système primaire de pilotage automatique (10) configuré pour générer une commande de freinage en fonction d'une trajectoire affectée au véhicule (1), et pour transmettre la commande de freinage au contrôleur primaire (12), respectivement au contrôleur auxiliaire (20), le contrôleur primaire (12), respectivement le contrôleur auxiliaire (20), déterminant la consigne de freinage à partir de la commande de freinage.

8. Equipement de contrôle selon la revendication 7, comprenant, en outre, un système auxiliaire de pilotage automatique (18), configuré pour déterminer une commande de freinage auxiliaire et pour transmettre la commande de freinage auxiliaire au contrôleur primaire (12), respectivement au contrôleur auxiliaire (20), le contrôleur primaire (12), respectivement le contrôleur auxiliaire (20), déterminant la consigne de freinage à partir de la commande de freinage auxiliaire.

9. Equipement de contrôle selon la revendication 8, dans lequel le contrôleur primaire (12) est propre à prendre en compte la commande de freinage auxiliaire à la place de la commande de freinage, lorsque la commande de freinage est supérieure à un seuil de pilotage automatique (SPF).

10. Equipement de contrôle selon l'une quelconque des revendications précédentes, comprenant en outre au moins un dispositif de pilotage manuel (24) pour générer une commande de freinage manuelle, le contrôleur primaire (12) étant propre à élaborer la consigne de freinage à partir de la commande de freinage manuel au lieu de la commande de freinage ou de la commande de freinage auxiliaire.

11. Equipement de contrôle selon la revendication 10, dans lequel le dispositif de pilotage manuel (24) est en outre configuré pour générer une commande d'arrêt manuelle, l'équipement de contrôle (4) comprenant en outre un deuxième actionneur auxiliaire (25) configuré pour déclencher un freinage d'urgence du véhicule (1) par génération d'une pression hydraulique prédéterminée dans le circuit hydraulique (17) lors de la réception de la commande d'arrêt manuelle.

12. Equipement de contrôle selon l'une quelconque des revendications précédentes, capable de contrôler, en outre, un angle de braquage du véhicule (1), le véhicule (1) comportant au moins une roue directrice (6), le contrôleur primaire (12) étant en outre configuré pour déterminer une consigne de braquage, l'équipement de contrôle (4) comprenant, en outre :
- un actionneur de braquage primaire configuré pour conférer un angle de braquage à la roue directrice (6) du véhicule (1) en fonction de la consigne de braquage lorsque ledit actionneur de braquage primaire reçoit ladite consigne de braquage, l'actionneur de braquage primaire comprenant un capteur de braquage interne configuré pour transmettre, au contrôleur primaire (12), un signal de braquage interne correspondant à une mesure de l'angle de braquage conféré par l'actionneur de braquage primaire ;
- un capteur de braquage externe configuré pour transmettre, au contrôleur primaire (12), un signal de braquage externe correspondant à une mesure de l'angle de braquage de la roue directrice (6) ;
- un actionneur de braquage auxiliaire, configuré pour conférer un angle de braquage à la roue directrice du véhicule (1) lorsque ledit actionneur de braquage auxiliaire reçoit ladite consigne de braquage ;
le contrôleur primaire (12) étant configuré pour déterminer une première valeur de braquage correspondant à la différence entre la consigne de braquage et le signal de braquage interne, et configuré pour déterminer une deuxième valeur de braquage correspondant à la différence entre le signal de braquage interne et le signal de braquage externe,
le contrôleur primaire (12) étant configuré pour transmettre la consigne de braquage à l'actionneur de braquage auxiliaire lorsque la première valeur de braquage est supérieure à un premier seuil de braquage et/ou lorsque la deuxième valeur de braquage est supérieure à un second seuil de braquage.

13. Véhicule automobile autonome (1), **caractérisé en ce qu'**il embarque un équipement de contrôle (4) conforme à l'une quelconque des revendications précédentes.
